# EUROPEAN PATENT SPECIFICATION

(11) **EP 4 549 166 B1**
(45) Date of publication and mention of the grant of the patent: **12.08.2026**
(21) Application number: 24773342.1
(22) Date of filing: 28.05.2024
(51) Int. Cl.: B42D 25/324, B42D 25/328, B42D 25/36, B42D 25/373, B42D 25/29, B42D 25/425, G02B 5/10

(54) **ANTI-COUNTERFEITING ELEMENT AND ARTICLE HAVING ANTI-COUNTERFEITING ELEMENT**
FÄLSCHUNGSSICHERES ELEMENT UND ARTIKEL MIT FÄLSCHUNGSSICHEREM ELEMENT
ÉLÉMENT ANTICONTREFAÇON ET ARTICLE COMPORTANT UN ÉLÉMENT ANTICONTREFAÇON

(30) Priority: 20.09.2023 CN 202311219834
(43) Date of publication of application: 07.05.2025
(73) Proprietor: Zhongchao Special Security Technology Co., Ltd, Beijing 100070 (CN); China Banknote Printing and Minting Corp., Beijing 100044 (CN)
(72) Inventor: YANG, Dong, Fengtai District Beijing 100070 (CN)
(74) Representative: J A Kemp LLP
(86) International application number: PCT/CN2024/095660
(87) International publication number: WO 2025/060476

(56) References cited:
- WO-A1-2022/227741
- CN-A- 102 292 219
- CN-A- 107 995 894
- CN-A- 109 153 280
- CN-A- 110 857 003
- CN-A- 110 857 003
- CN-A- 115 230 363
- DE-A1- 102005 061 749
- DE-A1- 102013 001 734
- DE-A1- 102015 005 969

## Description

### TECHNICAL FIELD

The present application relates to the anti-counterfeiting technical field, in particular relates to an anti-counterfeiting element and an article having the anti-counterfeiting element.

### BACKGROUND

In order to prevent counterfeiting by means of scanning and copying, optical anti-counterfeiting technology is widely used in various high-security or high-value-added printed matter such as banknotes, cards and product packaging, and has achieved very good results.

Disclosed in the prior art is an anti-counterfeiting element comprising a plurality of reflective facets, wherein the orientations of respective ones of the plurality of reflective facets are roughly randomly distributed, and the orientations of the plurality of reflective facets define the directions of emergent light for incident light in a predetermined direction, and changing the observation angle in two directions can both have a dynamic effect wherein the appearance varies with the change of observation angle. However, the anti-counterfeiting element needs to use a combination of multiple reflective facets to form a large area so as to enable the angles of emergent light to be uniformly distributed, and the combination of multiple reflective facets would also reduce the pattern resolution of the dynamic effect.

Document DE 10 2015 005 969 A1 discloses an anti-counterfeiting element providing a dynamic pattern for the observer upon illumination of curved surface structures.

### SUMMARY OF THE INVENTION

In view of this, the present application provides an anti-counterfeiting element and an article having the anti-counterfeiting element, so as to solve the problem that uniform distribution of the angles of emergent light cannot be achieved by a single reflective facet of the anti-counterfeiting element in the prior art and that the pattern resolution of the dynamic effect thereof is low.

In a first aspect, the present application provides an anti-counterfeiting element as defined in claim 1.

Beneficial effect: By arranging a plurality of curved-surface structures in the feature area, wherein each curved-surface structure has a plurality of light coordinate zones parallel to a surface of the feature area, and respective ones of the light coordinate zones correspond to line segments with different curvatures on the bright line in one-to-one correspondence, that is, the first and second directions of respective ones of the light coordinate zones of the curved-surface structure are not all the same, but are determined according to the relative position of the curved-surface structure with respect to the adjacent bright line. By arranging each curved-surface structure to be shaped in a curved manner along the first direction, for incident light in a predetermined direction, emergent light from the curved-surface structure can come out over a fan-shaped direction range, so that the angle distribution of the emergent light is more uniform, that is, an effect equivalent to the combination effect obtained by a plurality of reflective facets in the prior art can be obtained with each single curved-surface structure, therefore, a dynamic effect with higher resolution can be achieved for movement of the bright line, so that a finer and more stable appearance pattern can be realized, thereby increasing the viewable angle range.

In an optional embodiment, the first direction and the second direction are respectively arranged at a preset angle to the tangent direction of the bright line.

Beneficial effect: By arranging the first direction and the second direction at a preset angle to the tangent direction of the bright line, the observed appearance of the bright line is movable when the eyes change the observation position along the first direction and the second direction, so that different positions of the observed appearance of the bright line can be achieved, thereby forming a binocular observation, and having a three-dimensional visual effect.

In an optional embodiment, the first direction is parallel to the tangent direction of the bright line, and the second direction is perpendicular to the tangent direction of the bright line;
or, the first direction is perpendicular to the tangent direction of the bright line, and the second direction is parallel to the tangent direction of the bright line.

Beneficial effect: By arranging the first direction to be parallel to the tangent direction of the bright line and arranging the second direction to be perpendicular to the tangent direction of the bright line, when the anti-counterfeiting element is tilted, the movement direction of the bright line is parallel to the tilt direction of the anti-counterfeiting element, and an observer can feel that the bright line is suspended above the feature area or sunk below the feature area;

By arranging the first direction to be perpendicular to the tangent direction of the bright line and arranging the second direction to be parallel to the tangent direction of the bright line, when the anti-counterfeiting element is tilted, the movement direction of the bright line is perpendicular to the tilt direction of the anti-counterfeiting element, and an observer can feel an unconventional visual effect.

In an optional embodiment, the curved-surface structure has a predetermined tilt direction along the second direction, and a tilt degree of the curved-surface structure along the second direction is correlated with a relative position between the curved-surface structure and the bright line in the central position.

In an optional embodiment, the tilt degree of the curved-surface structure along the second direction is positively correlated with a distance between the curved-surface structure and the bright line in the central position.

Beneficial effect: The tilt degree of the curved-surface structure along the second direction determines the width of the bright line. The greater the tilt degree of the curved-surface structure along the second direction, the greater the width of the observed bright line and the lower the brightness of the bright line. By setting the tilt degree of the curved-surface structure along the second direction to be positively correlated with the relative position between the curved-surface structure and the bright line at the central position, that is, the closer the curved-surface structure is to the bright line at the central position, the smaller the tilt degree of the curved-surface structure along the second direction, the thinner and brighter the bright line, and vice versa, the farther the curved-surface structure is from the bright line at the central position, the greater the tilt degree of the curved-surface structure along the second direction, the wider and darker the bright line.

In an optional embodiment, the tilt degree of the curved-surface structure along the second direction is proportional to a distance between the curved-surface structure and the bright line in the central position.

In an optional embodiment, the bending degrees of the curved surface structure along both the first direction and the second direction are measured by a slope difference, wherein the slope difference refers to a maximum value of difference between slopes of segments of a cross-section line taken in a plane parallel to both the first direction and a height direction of the curved surface structure, or in a plane parallel to both the second direction and the height direction of the curved surface structure.

In an optional embodiment, a slope difference along the first direction within at least a portion of the curved-surface structure is greater than 0.05.

Beneficial effect: By increasing the slope difference along the first direction of the curved-surface structure, it is advantageous for increasing the observable angle range of the dynamic pattern.

In an optional embodiment, a slope difference along the first direction within at least a portion of the curved-surface structure is greater than 0.1.

In an optional embodiment, a slope difference along the second direction within at least a portion of the curved-surface structure is less than 0.05.

Beneficial effect: By reducing the slope difference along the second direction of the curved-surface structure, it is beneficial for improving the clarity of the bright line.

In an optional embodiment, at least a portion of the curved-surface structure is substantially straight along the second direction.

In an optional embodiment, for at least part of the plurality of curved-surface structures, a slope difference along the first direction is greater than 2 times of a slope difference along the second direction.

In an optional embodiment, for at least part of the plurality of curved-surface structures, a slope difference along the first direction is greater than 5 times of a slope difference along the second direction.

Beneficial effect: The curved-surface structure needs to satisfy a condition that the bending degree along the first direction of the curved-surface structure is greater than the bending degree along the second direction of the curved-surface structure, so that the bright line can be clearly distinguished. By increasing the ratio of the slope difference of the curved-surface structure along the first direction to the slope difference of the curved-surface structure along the second direction, it is beneficial for improving the clarity of the bright line.

In an optional embodiment, for at least part of the plurality of curved-surface structures, a slope difference along the first direction is between 1.4 and 2.8 times of a maximum average slope along the second direction.

Beneficial effect: The consistency of the observable angle range in both the first direction and the second direction can be achieved by setting the slope differences of the plurality of curved-surface structures along the first direction to be between 1.4 times and 2.8 times of the maximum average slope of the plurality of curved-surface structures along the second direction.

In an optional embodiment, for at least part of the plurality of curved-surface structures, a slope difference along the first direction does not vary with change of a distance between the curved-surface structure and the bright line in the central position.

Beneficial effect: The slope differences of the plurality of curved-surface structures along the first direction do not vary with change of the distance between the curved-surface structure and the bright line at the central position, so that the bending degrees of respective ones of the plurality of the curved-surface structures along the first direction are similar to one another, and the consistency of the observable angle range can be ensured.

In an optional embodiment, for at least part of the plurality of curved-surface structures, a slope difference along the first direction decreases with increase of a distance between the curved-surface structure and the bright line in the central position.

Beneficial effect: Since the average slope of the plurality of curved-surface structures along the second direction increases with the increase of a distance between the curved-surface structure and the bright line at the central position, in order to achieve the consistency of the observable angle range, the slope differences along the first direction of the plurality of curved-surface structures can be appropriately reduced so that the total slope of the curved-surface structure does not exceed the maximum expectation.

In an optional embodiment, a cross-section of the curved-surface structure along the first direction is convex and/or concave. In an optional embodiment, a distance between the highest point and the lowest point of a cross-section of the curved-surface structure along the first direction is greater than 3µm.

Beneficial effect: Since the cross-section of the curved-surface structure along the first direction is provided in a convex shape, a concave shape, or a wave shape, by setting the distance between the highest point and the lowest point of the cross-section of the curved-surface structure along the first direction to be greater than 3µm, the distance between the highest point and the lowest point is not too small, so that any undesired diffraction effect is prevented from being caused by the distance being too small.

In an optional embodiment, adjacent ones of the plurality of curved-surface structures form a continuous wavy shape.

Beneficial effect: By making the adjacent curved-surface structures in a continuous wavy shape, any abrupt change of slope at the junction between the adjacent curved-surface structures can be avoided, which is conducive to improving the light utilization rate of the anti-counterfeiting element.

In an optional embodiment, boundary lines between at least part of adjacent ones of the plurality of curved-surface structures are shaped in a curved manner.

In an optional embodiment, at least part of said boundary lines between adjacent ones of the plurality of curved-surface structures are arranged to follow a contour line of the plurality of curved-surface structures.

Beneficial effect: Since the boundary lines between the adjacent curved-surface structures are shaped in a curved manner, and the boundary lines between the adjacent curved-surface structures are arranged to follow a contour line of the plurality of curved-surface structures, the edges of the curved-surface structures at the boundaries thereof are of equal height, and this arrangement can prevent height fluctuation at part of the edges of the curved-surface structures.

In an optional embodiment, the bright line comprises a straight line and/or a curved line.

In an optional embodiment, an extending length of the curved-surface structure along the second direction is between 3µm and 50µm.

Beneficial effect: By limiting the length of the curved-surface structure along the second direction, the curved-surface structure can be prevented from extending too long along the second direction, because the longer the curved-surface structure is, the more difficult the production process thereof would be.

In an optional embodiment, the curved-surface structure is at least partially covered with a metal layer;
and/or, the curved-surface structure is at least partially covered with a dielectric layer;
and/or, the curved-surface structure is at least partially provided with a secondary microstructure thereon;
and/or, a difference of refractive indices of materials on two sides of the curved-surface structure is greater than 0.1.

Beneficial effect: By providing a metal layer and/or a dielectric layer covered on the curved-surface structure, the reflection effect of the curved-surface structure can be enhanced, and the appearance of the curved-surface structure having a color that varies with the change of observation angle can be achieved; By limiting the difference of the refractive indices of materials on two sides of the curved-surface structure to be greater than 0.1, the refractive effect for emergent light can be improved.

In an optional embodiment, at least part of the feature area at least partially comprises a dissipative structure, wherein a slope of the dissipative structure is greater than a maximum slope of the plurality of curved-surface structures within the anti-counterfeiting element.

Beneficial effect: In order to dissipate the excess light after forming the bright line, part of the excess light can be dissipated to non-observable directions by providing the dissipative structure that has a relatively large slope, thus enhancing the uniformity of light intensity on the bright line.

In an optional embodiment, the dynamic pattern comprises at least two bright lines that intersect each other, and the feature areas respectively corresponding to the at least two bright lines at least have an overlap area, and the overlap area comprises the curved-surface structures respectively corresponding to the at least two bright lines.

In a second aspect, the present application further provides an article as defined in claim 14.

Beneficial effect: Since the article having an anti-counterfeiting element comprises the above-mentioned anti-counterfeiting element, it has the same effect as that of the above-mentioned anti-counterfeiting element, which is not repeated herein.

In an optional embodiment, the anti-counterfeiting element comprises a first part and a second part, wherein the first part is arranged inside the article having the anti-counterfeiting element, and the second part is arranged outside the article having the anti-counterfeiting element;
or, the anti-counterfeiting element is attached to a surface of the article having the anti-counterfeiting element.

### BRIEF DESCRIPTION OF THE DRAWINGS

In order to explain more clearly technical schemes in specific embodiments of the present application or in the prior art, the drawings that need to be used in the description of specific embodiments or the prior art is briefly introduced below. Apparently, the drawings described below only represent some embodiments of the present application, and other drawings may be obtained from these drawings without any creative efforts by a person skilled in the art.
FIG 1 is a structural schematic diagram of an anti-counterfeiting element according to an embodiment of the present application;
FIG 2 is a structural schematic diagram along a first direction and a second direction of the anti-counterfeiting element of a first embodiment;
FIG 3 is a structural schematic diagram showing an appearance effect of the anti-counterfeiting element of the first embodiment;
FIG. 4 is a structural schematic diagram along a first direction and a second direction of the anti-counterfeiting element of a second embodiment;
FIG 5 is a structural schematic diagram showing an appearance effect of the anti-counterfeiting element of the second embodiment;
FIG 6 is a structural schematic diagram of a first direction and a second direction of the anti-counterfeiting element of a third embodiment;
FIG 7 is a structural schematic diagram showing that a cross-section of the curved-surface structure along a first direction is convex;
FIG 8 is a structural schematic diagram showing that a cross-section of the curved-surface structure along a first direction is wavy;
FIG 9 is a structural schematic diagram showing that the boundary lines between adjacent ones of the plurality of the curved-surface structures are arranged to follow a contour line.

### Reference numerals:

1-first direction; 2-second direction; 3-first anti-counterfeiting element; 301-first bright line; 302-second bright line; 303-third bright line; 304-first feature area; 305-second feature area; 306-third feature area; 4-second anti-counterfeiting element; 401-fourth bright line; 402-fourth feature area; 403-first view; 404-second view; 405-third view; 5-a third anti-counterfeiting element; 501-fifth bright line; 502-fifth feature area; 503-fourth view; 504-fifth view; 505-sixth view; 6-fourth anti-counterfeiting element; 601-sixth bright line; 602-sixth feature area; 7-height direction; 8-first curved-surface structure; 9-second curved-surface structure; 10-third curved-surface structure; 11-fourth curved-surface structure; 12-fifth curved-surface structure; 13-sixth curved-surface structure; 14-seventh curved-surface structure; 15-eighth curved-surface structure; 16-boundary line.

### DETAILED DESCRIPTION

In order to make the purpose, technical scheme and advantages of the embodiments of the present application clearer, the technical scheme of the embodiments of the present application will be clearly and completely described in conjunction with the accompanying drawings of the embodiments of the present application. Apparently, the described embodiments only represent a part of the embodiments of the present application, but not all of them. Based on the described embodiments of the present application, all other embodiments obtainable without creative efforts by those skilled in the art fall within the scope of protection of the present application.

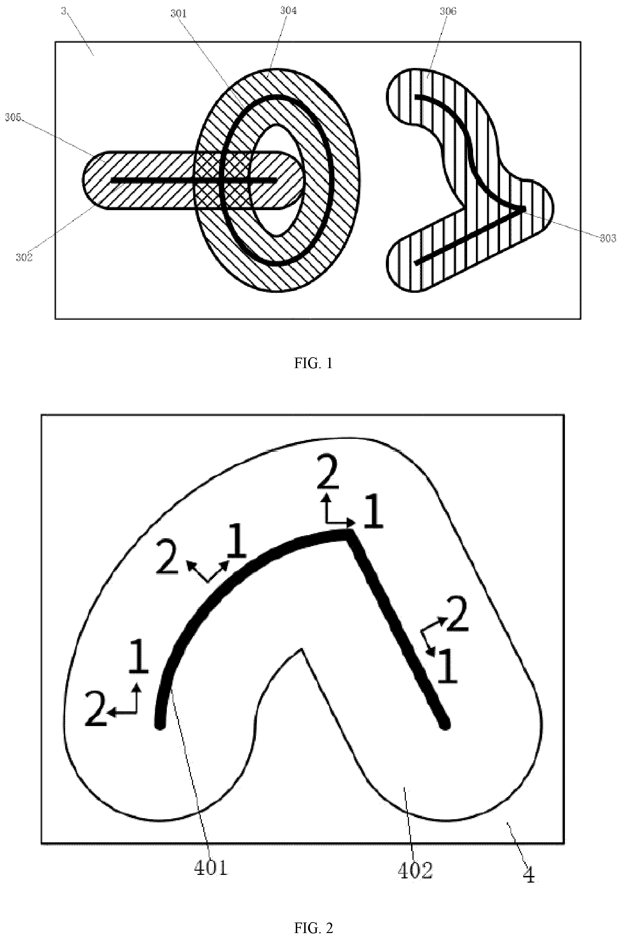

Embodiments of the present application will be described below in conjunction with FIGS. 1 to 9.

According to an embodiment of the present application, in one aspect, an anti-counterfeiting element is provided and comprises: a dynamic pattern, wherein the dynamic pattern comprises at least one bright line and has an appearance variable with change of an observation angle. When the dynamic pattern is observed in a first observation direction, the bright line is presented at a central position of the dynamic pattern. When the anti-counterfeiting element is tilted in different directions, the bright line moves away from the central position, and a feature area is an area within which the bright line moves; the feature area comprises a plurality of curved-surface structures, wherein each curved-surface structure has a plurality of light coordinate zones parallel to the surface of the feature area, each of the light coordinate zones include a first direction 1 and a second direction 2, respective ones of the light coordinate zones correspond to line segments with different curvatures on a bright line in one-to-one correspondence; the curved-surface structure is shaped in a curved manner along the first direction 1, wherein a bending degree of the curved-surface structure along the second direction 2 is less than that of the curved-surface structure along the first direction 1.

By arranging a plurality of curved-surface structures in a feature area, wherein each curved-surface structure has a plurality of light coordinate zones parallel to a surface of the feature area, and respective ones of the light coordinate zones correspond to line segments with different curvatures on the bright line in one-to-one correspondence, that is, the first and second directions 1, 2 of respective ones of the light coordinate zones of the curved-surface structure are not all the same, but are determined according to the relative position of the curved-surface structure with respect to the adjacent bright line. By arranging each curved-surface structure to be shaped in a curved manner along the first direction 1, for incident light in a predetermined direction, emergent light from the curved-surface structure can come out over a fan-shaped direction range, so that the angle distribution of the emergent light is more uniform, that is, an effect equivalent to the combination effect obtained by a plurality of reflective facets in the prior art can be obtained with each single curved-surface structure, therefore, a dynamic effect with higher resolution can be achieved for movement of the bright line, so that a finer and more stable appearance pattern can be realized, thereby increasing the viewable angle range.

The anti-counterfeiting element in this embodiment achieves a dynamic effect by means of a plurality of curved-surface structures that is indistinguishable by naked eyes. The curved-surface structure is used as a reflective surface or a refractive surface for light, and the light is projected out according to a predetermined direction distribution. Unlike a plane used as a reflective surface or a refractive surface can only project light to a single viewing direction, by setting the morphology of the surface of the curved-surface structure, light can be projected to a plurality of viewing directions and/or viewing directions over at least one continuous range of angles. The curved-surface structure can achieve the desired dynamic effect when used as a reflective surface or a refractive surface.

In this embodiment, the first direction 1 and the second direction 2 of the curved-surface structure are respectively arranged at a preset angle to the tangent direction of the bright line. By arranging the first direction and the second direction at a preset angle to the tangent direction of the bright line, the observed appearance of the bright line is movable when the eyes change the observation position along the first direction and the second direction, so that different positions of the observed appearance of the bright line can be achieved, thereby forming a binocular observation, and having a three-dimensional visual effect.

Specifically, as shown in FIG 2, the first direction 1 of the curved-surface structure is parallel to the tangent direction of the bright line, and the second direction 2 is perpendicular to the tangent direction of the bright line. By arranging the first direction to be parallel to the tangent direction of the bright line and arranging the second direction to be perpendicular to the tangent direction of the bright line, when the anti-counterfeiting element is tilted, the movement direction of the bright line is parallel to the tilt direction of the anti-counterfeiting element, and an observer can feel that the bright line is suspended above the feature area or sunk below the feature area;
Taking the second anti-counterfeiting element 4 in FIG 2 as an example, a fourth bright line 401 corresponds to a fourth feature area 402, the curved-surface structures at different positions in the fourth feature area 402 have respective specific light coordinate zones, and each of the light coordinate zones comprises a first direction 1 and a second direction 2, the light coordinate zones of the curved-surface structures at different positions correspond to line segments having different curvatures on the adjacent bright line in one-to-one correspondence, wherein the first direction 1 is each parallel to the tangent direction of the adjacent fourth bright line 401, and the second direction 2 is each perpendicular to the tangent direction of the adjacent fourth bright line 401.

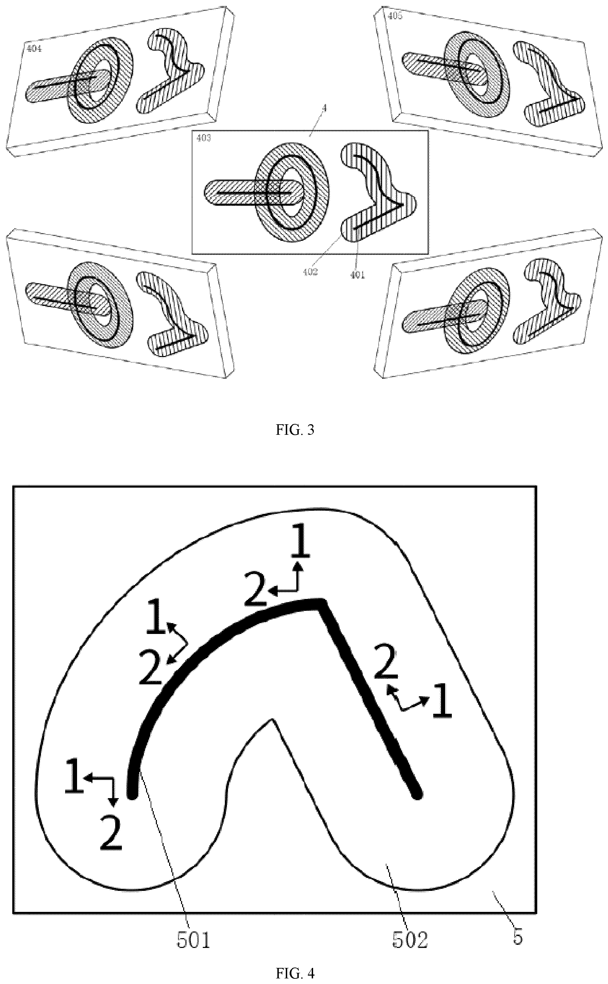

The appearance effect of this embodiment is shown in FIG 3, the second anti-counterfeiting element 4 in the first view 403 is at the first observation position, wherein the fourth bright line 401 is located in the central position of the fourth feature area 402, and when the observation position is changed along different directions parallel to the surface of the second anti-counterfeiting element 4, the fourth bright line 401 moves within the corresponding fourth feature area 402 in different directions away from the central position. Compared with the first view 403, the observation position of the second view 404 changes to the lower right, and the fourth bright line 401 moves to the upper left; the observation position of the third view 405 changes to the lower left, and the fourth bright line 401 moves to the upper right. The second anti-counterfeiting element 4 has at least two directions parallel to the surface thereof, and the fourth bright line 401 moves when changing the observation position along these two directions. Therefore, when the observation positions of the eyes are different, the positions of the observed appearance of the bright line are also different, so as to form a binocular observation and have a three-dimensional visual effect.

In an alternative embodiment, as shown in FIG 4, the first direction 1 is perpendicular to the tangent direction of the bright line, and the second direction 2 is parallel to the tangent direction of the bright line. By arranging the first direction 1 to be perpendicular to the tangent direction of the bright line and arranging the second direction 2 to be parallel to the tangent direction of the bright line, when the anti-counterfeiting element is tilted, the movement direction of the bright line is perpendicular to the tilt direction of the anti-counterfeiting element, and an observer can feel an unconventional visual effect.

Taking the third anti-counterfeiting element 5 in FIG 4 as an example, a fifth bright line 501 corresponds to a fifth feature area 502, and the curved-surface structures at different positions in the fifth feature area 502 have respective specific light coordinate zones, each of the light coordinate zones comprises a first direction 1 and a second direction 2, the light coordinate zones of the curved-surface structures at different positions correspond to line segments having different curvatures on the adjacent bright line in one-to-one correspondence, wherein the first direction 1 is each perpendicular to the tangent direction of the adjacent fifth bright line 501, and the second direction 2 is each parallel to the tangent direction of the adjacent fifth bright line 501.

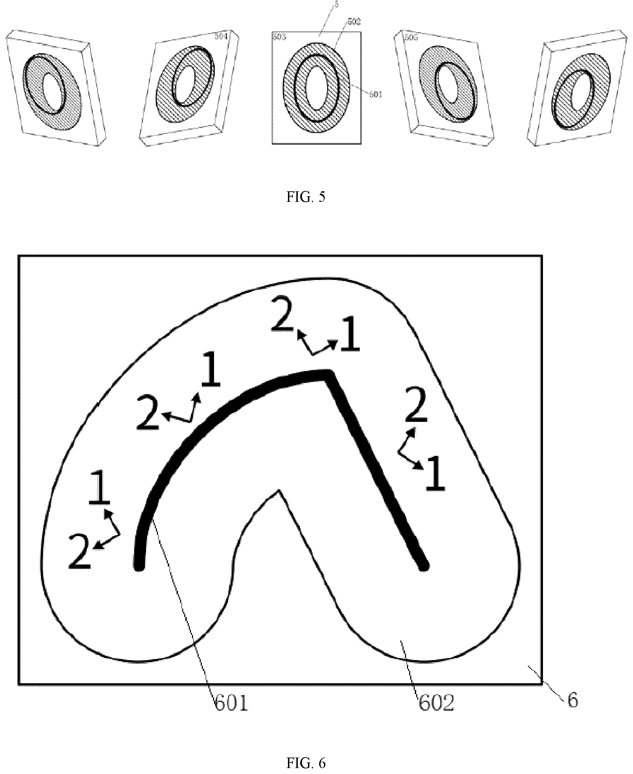

The appearance effect of this embodiment is shown in FIG 5. the third anti-counterfeiting element 5 in the fourth view 503 is at the first observation position, wherein the fifth bright line 501 is located in the central position of the fifth feature area 502, and when the observation position is changed along different directions parallel to the surface of the third anti-counterfeiting element 5, the fifth bright line 501 moves within the corresponding fifth feature area 502 in different directions away from the central position. Compared with the fourth view 503 of the first view position, the observation position of the fifth view 504 is changed to the lower right, that is, the third anti-counterfeiting element 5 is tilt to the upper left, and the fifth bright line 501 moves to the upper right; the observation position of the sixth view 505 is changed to the lower left, that is, the third anti-counterfeiting element 5 is tilt to the upper right, and the fifth bright line 501 moves to the lower right. The optical element has at least two directions parallel to the surface thereof, and the bright line moves when changing the observation position along these two directions. As a result, the direction in which the bright line moves is perpendicular to the direction in which the optical element is tilt, resulting in an unconventional visual effect.

In an alternative embodiment, as shown in FIG 6, both the first direction 1 and the second direction 2 are at a specific angle to the tangent direction of the bright line, such as an acute angle. When the anti-counterfeiting element is tilt, the movement direction of the bright line is also at a specific angle to the tilt direction of the anti-counterfeiting element. Taking the fourth anti-counterfeiting element 6 in FIG 6 as an example, a sixth bright line 601 corresponds to a sixth feature area 602, the curved-surface structures at different positions in the sixth feature area 602 have respective specific light coordinate zones, and each of the light coordinate zones comprise a first direction 1 and a second direction 2, and the optical coordinate zones of the curved-surface structures at different positions correspond to line segments having different curvatures on the adjacent sixth bright line 601 in one-to-one correspondence, wherein the first direction 1 and the second direction 2 are respectively at a specific angle to the tangent direction of the adjacent sixth bright line 601.

As shown in FIG 1, the bright line in this embodiment comprises a straight line and a curved line. The first anti-counterfeiting element 3 in FIG 1 is a schematic representation of a dynamic pattern, wherein the dynamic pattern consists of a first bright line 301, a second bright line 302, and a third bright line 303, and the first bright line 301 corresponds to a first feature area 304, the second bright line 302 corresponds to a second feature area 305, and the third bright line 303 corresponds to a third feature area 306. The combination of bright lines is not limited to this, in fact, in other embodiments, these bright lines can have other shapes, and can form a dynamic pattern by themselves, or form other dynamic patterns in conjunction with other bright lines or even in conjunction with bright lines with other effects, which is not overly restricted herein.

According to the requirements of the design of dynamic pattern, the bright line may be a straight line, such as the second bright line 302; or may be a curved line, such as the first bright line 301; or may consist of a mixture of curved line segment and straight line segment, such as the third bright line 303. Different positions on the same bright line may have different curvatures, such as the first bright line 301; different positions on the same bright line may have different bending directions, such as the third bright line 303; the bright line may have an inflection point, such as the third bright line 303; the bright lines may be disconnected from end to end, such as the second bright line 302 and the third bright line 303; or the bright line may be connected from end to end, such as the first bright line 301; the bright lines may intersect, such as the first bright line 301 and the second bright line 302 intersect each other, the first feature area 304 of the first bright line 301 and the second feature area 305 of the second bright line 302 also intersect each other, and in the overlap area, curved-surface structures corresponding to the first bright line 301 and curved-surface structures corresponding to the second bright line 302 are mixed.

For those with design requirements for special dynamic patterns, bright lines can also form a variety of dynamic patterns by means of various shapes and combinations, such as numbers, letters, Chinese characters, stick figures, geometric figures, etc.

In one embodiment, there are two bright lines respectively movable in opposite directions in the dynamic pattern, so that a stronger dynamic contrast effect can be realized.

The bending degrees of the curved-surface structure along both the first direction 1 and the second direction 2 are measured by a slope difference, wherein the slope difference refers to a maximum value of difference between slopes of segments of a cross-section line taken in a plane parallel to both the first direction 1 and a height direction 7 of the curved-surface structure, or taken in a plane parallel to both the second direction 2 and the height direction 7 of the curved-surface structure. The slope difference of the cross-section line refers to the difference value between slopes of two segments with the largest difference between the slopes thereof on the cross-section line. The greater the slope difference, the greater the bending degree.

The curved-surface structure has a predetermined tilt direction along the second direction 2, and the tilt degree of the curved-surface structure along the second direction 2 is correlated with a relative position between the curved-surface structure and the bright line in the central position. Specifically, the tilt degree of the curved-surface structure along the second direction 2 is positively correlated with the distance between the curved-surface structure and the bright line in the central position. Further, the tilt degree of the curved-surface structure along the second direction 2 is proportional to the distance between the curved-surface structure and the bright line in the central position. Herein, the tilt degree of the curved-surface structure along the second direction 2 refers to the tilt degree of the cross-section line of the curved-surface structure taken in the plane parallel to both the second direction 2 and the height direction 7, which can be measured by the average slope of the cross-section line of the curved-surface structure taken in the plane parallel to both the second direction 2 and the height direction 7.

The tilt degree of the curved-surface structure along the second direction 2 determines the width of the bright line. The greater the tilt degree of the curved-surface structure along the second direction 2, the greater the width of the observed bright line and the lower the brightness of the bright line. By setting the tilt degree of the curved-surface structure along the second direction 2 to be positively correlated with the relative position between the curved-surface structure and the bright line at the central position, that is, the closer the curved-surface structure is to the bright line at the central position, the smaller the tilt degree of the curved-surface structure along the second direction 2, the thinner and brighter the bright line, and vice versa, the farther the curved-surface structure is from the bright line at the central position, the greater the tilt degree of the curved-surface structure along the second direction 2, the wider and darker the bright line.

In order to increase the viewable angle range of the emergent light, a slope difference along the first direction 1 of at least two segments of the curved-surface structure is greater than 0.1. As an alternative embodiment, it may also be that the slope difference along the first direction 1 of at least two segments of the curved-surface structure is between 0.05 and 0.1.

In order to improve the clarity of the bright line, a slope difference along the second direction 2 within at least a portion of the curved-surface structure is less than 0.05. Specifically, the curved-surface structure is substantially straight along the second direction 2. That is, the cross-section line of the curved-surface structure taken in the plane parallel to both the second direction 2 and the height direction 7 is straight. Said straight herein is not absolutely straight in the mathematical sense, but instead the cross-section line is allowed to have a small fluctuation relative to a straight line. For optical reflection or refraction, a fluctuation less than the optical path difference of a quarter of a wavelength can be ignored and such a line can be considered straight. As an alternative embodiment, it may also be that a slope difference along the second direction 2 of the curved-surface structure is between 0.05 and 0.2.

In one embodiment, for at least part of the plurality of curved-surface structures, a slope difference along the first direction 1 is greater than 2 times of a slope difference along the second direction 2. Specifically, for at least part of the plurality of curved-surface structures, a slope difference along the first direction 1 is greater than 5 times of a slope difference along the second direction 2. The curved-surface structure needs to satisfy a condition that the bending degree along the first direction 1 of the curved-surface structure is greater than the bending degree along the second direction 2 of the curved-surface structure, so that the bright line can be clearly distinguished. By increasing the ratio of the slope difference of the curved-surface structure along the first direction 1 to the slope difference of the curved-surface structure along the second direction 2, it is beneficial for improving the clarity of the bright line. As an alternative embodiment, it may also be that for at least part of the plurality of curved-surface structures, a slope difference along the first direction 1 is greater than 3 times or 4 times of a slope difference along the second direction 2.

In one embodiment, for at least part of the plurality of curved-surface structures, a slope difference along the first direction 1 is between 1.4 and 2.8 times of a maximum average slope along the second direction 2. The consistency of the observable angle range in both the first direction and the second direction can be achieved by setting the slope differences of the plurality of curved-surface structures along the first direction 1 to be between 1.4 times and 2.8 times of the maximum average slope of the plurality of curved-surface structures along the second direction. Since the maximum value of slope of the plurality of curved-surface structures should be substantially the same along both the first direction 1 and the second direction 2, and the slope distribution of each single curved-surface structure along the first direction 1 is substantially symmetrical, so that the maximum value of slope of each single curved-surface structure along the first direction 1 is half of the slope difference of said single curved-surface structure; the slope difference of respective ones of the plurality of curved-surface structures along the second direction 2 are different, and the maximum value of slope along the second direction 2 is the value of slope of a curved-surface structure which has the maximum average slope along the second direction 2. Therefore, in the most ideal case, the slope difference of the plurality of curved-surface structures along the first direction 1 should be 2 times of the maximum average slope of the plurality of curved-surface structures along the second direction 2. As alternative embodiments, the slope difference of the plurality of curved-surface structures along the first direction 1 may be 1.4 times, or 1.5 times, or 2.5 times, or 2.8 times, of the maximum average slope of the plurality of curved-surface structures along the second direction 2.

In one embodiment, for at least part of the plurality of curved-surface structures, a slope difference along the first direction 1 does not vary with change of a distance between the curved-surface structure and the bright line in the central position. The slope differences of the plurality of curved-surface structures along the first direction do not vary with change of the distance between the curved-surface structure and the bright line at the central position, so that the bending degrees of respective ones of the plurality of the curved-surface structures along the first direction are similar, and the consistency of the observable angle range can be ensured. As an alternative embodiment, it may also be that for at least part of the plurality of curved-surface structures along the first direction 1 decreases with increase of a distance between the curved-surface structure and the bright line in the central position. Since the average slope of the plurality of curved-surface structures along the second direction increases with the increase of a distance between the curved-surface structure and the bright line at the central position, in order to achieve the consistency of the observable angle range, the slope differences of the plurality of curved-surface structures along the first direction can be appropriately reduced so that the total slope of the curved-surface structure does not exceed the maximum expectation.

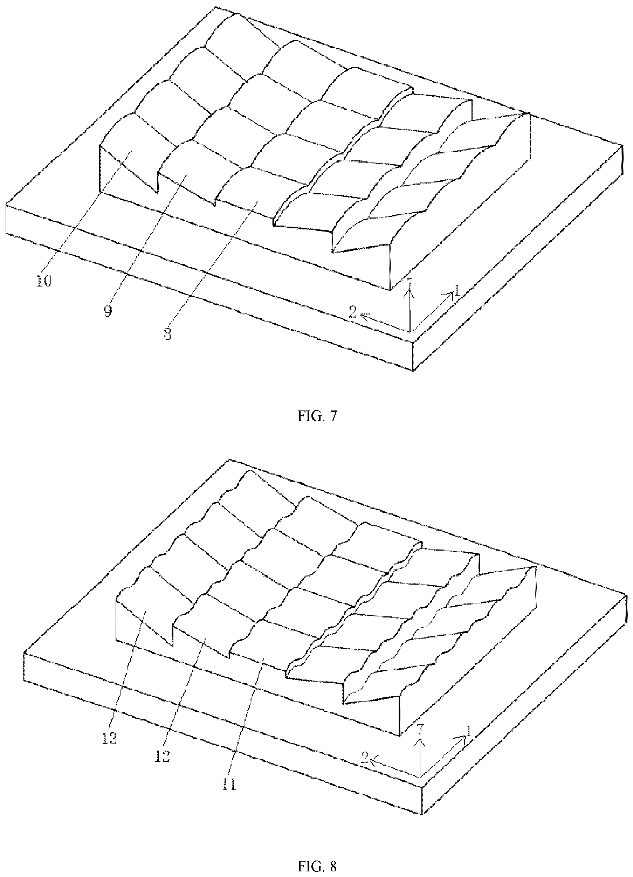

As shown in FIG 7, a cross-section of each single curved-surface structure along the first direction 1 is in a convex shape. It should be noted that this schematic diagram is only for schematic purposes and does not represent actual parameters such as size, proportion, and quantity. For example, in practice, the size of one curved-surface structure is at least one order of magnitude smaller than that of the feature area, and there would be a considerable number of curved-surface structures in one feature area, while only a small number of curved-surface structures are shown in the schematic diagram; Also, as in the schematic diagram, the boundary of the curved-surface structure is parallel to the first direction 1 or the second direction 2, in practice, the boundary of the curved-surface structure may not be parallel to the first direction 1 or the second direction 2, or the boundary of the curved-surface structure may be a polygon or have a curved boundary line. The first curved-surface structure 8, the second curved-surface structure 9, and the third curved-surface structure 10 are examples in which there is only one convex protrusion along the first direction 1, the first curved-surface structure 8 is located near the bright line at the central position, so it is substantially not tilt or has a small tilt degree along the second direction 2, and the third curved-surface structure 10 is located at the edge portion of the feature area, so it has a maximum tilt degree along the second direction 2, the tilt degree herein can be measured by the tilt angle or slope. From the first curved-surface structure 8 to the third curved-surface structure 10, that is, as the distance between the curved-surface structure and the bright line at the central position becomes farther, the tilt degree of the curved-surface structure along the second direction 2 becomes greater. As an alternative embodiment, the cross-section of the curved-surface structure along the first direction 1 may be in a recessed concave shape.

As an alternative embodiment, the cross-section of at least part of the plurality of curved-surface structures along the first direction 1 may include both convex shaped segment and concave shaped segment, that is, in a wavy shape. FIG 8 is a schematic diagram of this embodiment. It should be noted that the schematic diagram is only for schematic purposes only and does not represent actual parameters such as size, proportion, and quantity. For example, in practice, the size of one curved-surface structure is at least one order of magnitude smaller than that of the feature area, and there would be a considerable number of curved-surface structures in one feature area, while only a small number of curved-surface structures are shown in the schematic diagram; Also, as in the schematic diagram, the boundary of the curved-surface structure is parallel to the first direction 1 or the second direction 2, in practice, the boundary of the curved-surface structure may not be parallel to the first direction 1 or the second direction 2, or the boundary of the curved-surface structure may be a polygon or have a curved boundary line. The fourth curved-surface structure 11, the fifth curved-surface structure 12, and the sixth curved-surface structure 13 are examples in which the cross-section thereof is wavy along the first direction 1, the fourth curved-surface structure 11 is located near the bright line at the central position, so it is substantially not tilt or has a small tilt degree along the second direction 2, and the sixth curved-surface structure 13 is located at the edge portion of the feature area, so it has a maximum tilt degree along the second direction 2. From the fourth curved-surface structure 11 to the sixth curved-surface structure 13, that is, as the distance between the curved-surface structure and the bright line at the central position becomes farther, the tilt degree of the curved-surface structure along the second direction 2 becomes greater.

In this embodiment, adjacent ones of the plurality of curved-surface structures form a continuous wavy shape, so that any abrupt change of slope at the junction between the adjacent curved-surface structures can be avoided. As shown in FIG 8, the slope at the junction between the adjacent curved-surface structures is continuous along the first direction 1, and this arrangement is conducive to improving the light utilization rate of the anti-counterfeiting element.

Wherein the distance between the highest point and the lowest point of a cross-section of the curved-surface structure along the first direction 1 is greater than 3µm, and the extending length of the curved-surface structure along the second direction 2 is between 3µm and 50µm. Since the cross-section of the curved-surface structure along the first direction is provided in a convex shape, a concave shape, or a wave shape, by setting the distance between the highest point and the lowest point of the cross-section of the curved-surface structure along the first direction to be greater than 3µm, the distance between the highest point and the lowest point is not too small, so that any undesired diffraction effect is prevented from being caused by the distance being too small. By limiting the length of the curved-surface structure along the second direction 2, the curved-surface structure can be prevented from extending too long along the second direction 2, because the longer the curved-surface structure is, the more difficult the production process would be. Of course, in specific settings, the distance between the highest point and the lowest point of the cross-section of the surface structure 6 along the first direction 1 may be set to 3.5µm, 4µm, 10µm, 40µm, etc., which is not overly restricted herein.

In one embodiment, boundary lines 16 between at least part of adjacent ones of the plurality of curved-surface structures are shaped in a curved manner, which facilitates the reduction of height fluctuation on the boundary lines 16 and the reduction of the overall height of the curved-surface structures 6, and consequently the difficulty level of production can be reduced. Specifically, at least part of said boundary lines 16 between adjacent ones of the plurality of curved-surface structures 6 are shaped to follow a contour line of the plurality of curved-surface structures. Since the boundary lines 16 between the adjacent curved-surface structures are shaped in a curved manner, and the boundary lines 16 between the adjacent curved-surface structures are arranged to follow a contour line of the plurality of curved-surface structures, the edges of the curved-surface structures at the boundary lines 16 are of equal height, and this arrangement can prevent height fluctuation at part of the edges of the curved-surface structures.

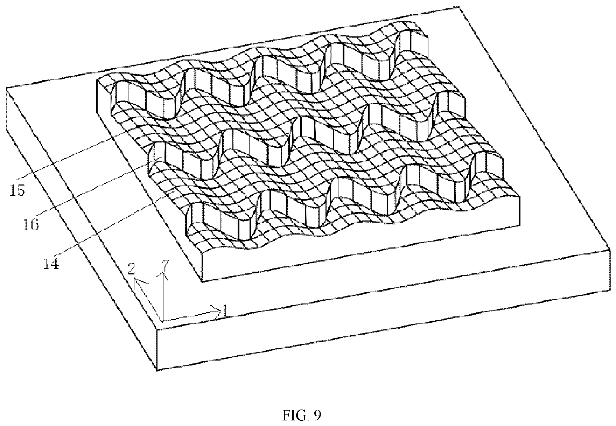

FIG 9 is a schematic diagram showing that, in a feature area of the anti-counterfeiting element, there is a boundary line 16 between a seventh curved-surface structure 14 and an eighth curved-surface structure 15, wherein the boundary line 16 is arranged to follow a contour line of the seventh curved-surface structure 14, i.e., the edge of the seventh curved-surface structure 14 at the boundary line 16 is of equal height, and this arrangement can prevent height fluctuation of part of the edges of the curved-surface structures as compared to the arrangement of setting the boundary line 16 to be in the shape of a straight line. It should be noted that the small squares in FIG 9 are only intended to facilitate the recognition of the contour line which the boundary line 16 between the adjacent curved-surface structures is arranged to follow, and have no other practical meanings.

The seventh curved-surface structure 14 and the eighth curved-surface structure 15 are adjacent curved-surface structures. Since the size of the curved-surface structures are much smaller than the size of the feature area, The distance from the seventh curved-surface structure 14 to the bright line at the central position and the distance from the eighth curved-surface structure 15 to the bright line at the central position have very small difference, and therefore the tilt degrees of the seventh curved-surface structure 14 and the eighth curved-surface structure 15 along the second direction 2 also have very small difference.

In one embodiment, the curved-surface structure is covered with a metal layer and/or a dielectric layer, so that the reflection effect of the curved-surface structure can be enhanced. Specifically, the curved-surface structure can be at least partially covered with a metal-dielectric-metal three-layered structure, which can achieve an appearance having a color that varies with the change of the observation angle, such as an aluminum-silicon dioxide-chromium three-layered structure, and similar appearance effects can also be achieved by being covered with a dielectric-metal-dielectric three-layered structure, a multi-layered dielectric structure, and the like. As an alternative embodiment, only a metal layer or only a dielectric layer may be covered on the curved-surface structure. As an alternative embodiment, the curved-surface structure may only partially be covered with a metal layer or a dielectric layer, or partially be covered with both a metal layer and a dielectric layer.

In one embodiment, the curved-surface structure is at least partially provided with a secondary microstructure thereon, such as one-dimensional or two-dimensional gratings with a pitch of less than 450nm. By setting the secondary microstructure, the color of reflected light can be modulated, and an appearance effect of at least two colors being viewable at a fixed observation angle can be achieved.

In one embodiment, a difference of refractive indices of materials on two sides of the curved-surface structure is greater than 0.1. Since the two sides of the curved-surface structure need to have a difference in refractive indices to achieve a refraction effect for light, the materials on the two sides of the curved-surface structure may mean that one side of the curved-surface structure is exposed in air, generally, the interface between air and a resin material has a large difference in refractive indices, or the refractive indices of resin materials on the two sides of the curved-surface structure have a certain difference. By limiting the difference of refractive indices of materials on two sides of the curved-surface structure to be greater than 0.1, the refractive effect for emergent light can be improved.

In order to prolong the service life of the anti-counterfeiting element, a protective adhesive or a composite protective film may also be coated on the curved-surface structure.

In one embodiment, at least part of the feature area at least partially comprises a dissipative structure, wherein a slope of the dissipative structure is greater than a maximum slope of the plurality of curved-surface structures within the anti-counterfeiting element. The dissipative structure herein may be a curved-surface structure or a straight planar surface structure, as long as its slope is set to be greater than the maximum slope of other curved-surface structures within the anti-counterfeiting element, which is not overly restricted herein. In order to dissipate the excess light after forming the bright line, part of the excess light can be dissipated to non-observable directions by providing the dissipative structure that has a relatively large slope, thus enhancing the uniformity of light intensity on the bright line.

The anti-counterfeiting element disclosed in this embodiment has the advantages of high resolution and uniform distribution of the angles of emergent light. In this embodiment, by customizing the morphologies of the curved-surface structures to increase the viewable angle range, an effect equivalent to the combination effect obtained by a plurality of randomly oriented optical facets in the prior art can be obtained with each single curved-surface structure, which can not only achieve a dynamic effect with higher resolution, but also achieve a more uniform distribution of the angles of emergent light, so as to achieve a finer and more stable appearance pattern.

The anti-counterfeiting element disclosed in this embodiment is more difficult to counterfeit, the curved-surface structures with customized morphologies have higher degree of freedom, and more parameters are required to describe each single curved-surface structure, which are difficult to measure, and even more difficult to be copied and counterfeited by a counterfeiter.

According to embodiments of the present application, in another aspect, an article having an anti-counterfeiting element is also provided and comprises: the above-mentioned anti-counterfeiting element.

An article with an anti-counterfeiting element in this embodiment is a banknote. As an alternative embodiment, the article having the anti-counterfeiting element may be an anti-counterfeiting paper, or an identity card or other valuable document, such as a chip card, a check, a receipt, a contract, a credit card, and the like.

Wherein the anti-counterfeiting element comprises a first part and a second part, the first part is arranged inside the banknote, and the second part is arranged outside the banknote. As an alternative embodiment, the anti-counterfeiting element may be hot stamped onto the surface of the banknote by means of pre-coated hot-melt adhesive, or the anti-counterfeiting element may be pasted onto the surface of the banknote.

The anti-counterfeiting element may specifically be an anti-counterfeiting line, a sealing tape, an anti-counterfeiting tape, an anti-counterfeiting strip, a patch, a label, etc., so as to be applied to anti-counterfeiting paper, valuable documents and other such articles.

While embodiments of the present application are described with reference to the accompanying drawings, a person skilled in the art may make various modifications and variations.

## Claims

1. An anti-counterfeiting element (3, 4, 5, 6), comprising:
a dynamic pattern, wherein the dynamic pattern comprises at least one bright line and has an appearance variable with change of an observation angle, when the dynamic pattern is observed in a first observation direction, the bright line is presented at a central position of the dynamic pattern, and when the anti-counterfeiting element is tilted in different directions, the bright line moves away from the central position, and a feature area is an area range within which the bright line moves;
wherein the feature area comprises a plurality of curved-surface structures, each curved-surface structure has a plurality of light coordinate zones parallel to a surface of the feature area, each of the light coordinate zones includes a first direction (1) and a second direction (2), respective ones of the light coordinate zones correspond to line segments with different curvatures on the bright line in one-to-one correspondence; the curved-surface structure is shaped in a curved manner along the first direction (1), a bending degree of the curved-surface structure along the second direction (2) is less than a bending degree of the curved-surface structure along the first direction (1).

2. The anti-counterfeiting element according to claim 1, **characterized in that**, the first direction (1) and the second direction (2) are respectively arranged at a preset angle to the tangent direction of the bright line.

3. The anti-counterfeiting element according to claim 2, **characterized in that**, the first direction (1) is parallel to the tangent direction of the bright line, and the second direction (2) is perpendicular to the tangent direction of the bright line;
or, the first direction (1) is perpendicular to the tangent direction of the bright line, and the second direction (2) is parallel to the tangent direction of the bright line.

4. The anti-counterfeiting element according to claim 1, **characterized in that**, the curved-surface structure has a predetermined tilt direction along the second direction (2), and a tilt degree of the curved-surface structure along the second direction (2) is correlated with a relative position between the curved-surface structure and the bright line in the central position; or the tilt degree of the curved-surface structure along the second direction (2) is positively correlated with a distance between the curved-surface structure and the bright line in the central position; or the tilt degree of the curved-surface structure along the second direction (2) is proportional to a distance between the curved-surface structure and the bright line in the central position.

5. The anti-counterfeiting element according to any one of claims 1-4, **characterized in that**, the bending degrees of the curved-surface structure along both the first direction (1) and the second direction (2) are measured by a slope difference, wherein the slope difference refers to a maximum value of difference between slopes of segments of a cross-section line, the cross-section line is taken in a plane parallel to both the first direction (1) and a height direction (7) of the curved-surface structure, or the cross-section line is taken in a plane parallel to both the second direction (2) and the height direction (7) of the curved-surface structure,
wherein a slope difference along the first direction (1) within at least a portion of the curved-surface structure is greater than 0.05;
or a slope difference along the first direction (1) within at least a portion of the curved-surface structure is greater than 0.1;
or a slope difference along the second direction (2) within at least a portion of the curved-surface structure is less than 0.05.

6. The anti-counterfeiting element according to claim 5, **characterized in that**, at least a portion of the curved-surface structure is substantially straight along the second direction (2).

7. The anti-counterfeiting element according to claim 5, **characterized in that**, for at least part of the plurality of curved-surface structures, a slope difference along the first direction (1) is greater than 2 times of a slope difference along the second direction (2);
or for at least part of the plurality of curved-surface structures, a slope difference along the first direction (1) is greater than 5 times of a slope difference along the second direction (2);
or for at least part of the plurality of curved-surface structures, a slope difference along the first direction (1) is between 1.4 and 2.8 times of a maximum average slope along the second direction (2);
or for at least part of the plurality of curved-surface structures, a slope difference along the first direction (1) does not vary with change of a distance between the curved-surface structure and the bright line in the central position;
or for at least part of the plurality of curved-surface structures, a slope difference along the first direction (1) decreases with increase of a distance between the curved-surface structure and the bright line in the central position.

8. The anti-counterfeiting element according to any one of claims 1-4, **characterized in that**, a cross-section of the curved-surface structure along the first direction (1) is convex and/or concave;
or a distance between the highest point and the lowest point of the cross-section of the curved-surface structure along the first direction (1) is greater than 3µm;
or adjacent ones of the plurality of curved-surface structures form a continuous wavy shape.

9. The anti-counterfeiting element according to any one of claims 1 to 4, **characterized in that**, boundary lines between at least part of adjacent ones of the plurality of curved-surface structures (16) are shaped in a curved manner, and at least part of said boundary lines (16) between adjacent ones of the plurality of curved-surface structures are arranged to follow a contour line of the plurality of curved-surface structures.

10. The anti-counterfeiting element according to any one of claims 1-4, **characterized in that**, the bright line comprises a straight line and/or a curved line;
or an extending length of the curved-surface structure along the second direction (2) is between 3µm and 50µm.

11. The anti-counterfeiting element according to any one of claims 1-4, **characterized in that**, the curved-surface structure is at least partially covered with a metal layer;
and/or, the curved-surface structure is at least partially covered with a dielectric layer;
and/or, the curved-surface structure is at least partially provided with a secondary microstructure thereon;
and/or, a difference of refractive indices of materials on two sides of the curved-surface structure is greater than 0.1.

12. The anti-counterfeiting element according to any one of claims 1-4, **characterized in that**, at least part of the feature area at least partially comprises a dissipative structure, wherein a slope of the dissipative structure is greater than a maximum slope of the plurality of curved-surface structures within the anti-counterfeiting element.

13. The anti-counterfeiting element according to any one of claims 1-4, **characterized in that**, the dynamic pattern comprises at least two bright lines that intersect each other, and the feature areas respectively corresponding to the at least two bright lines at least have an overlap area, and the overlap area comprises the curved-surface structures respectively corresponding to the at least two bright lines.

14. An article having an anti-counterfeiting element, **characterized in** comprising: the anti-counterfeiting element of any one of claims 1-13.

15. The article having an anti-counterfeiting element according to claim 14, **characterized in that**, the anti-counterfeiting element comprises a first part and a second part,
wherein the first part is arranged inside the article having the anti-counterfeiting element, and the second part is arranged outside the article having the anti-counterfeiting element;
or, the anti-counterfeiting element is attached to a surface of the article having the anti-counterfeiting element.

## Patentansprüche

1. Fälschungsschutzelement (3, 4, 5, 6), das umfasst:
ein dynamisches Muster, wobei das dynamische Muster mindestens eine helle Linie umfasst und ein Erscheinungsbild aufweist, das sich mit Änderung des Betrachtungswinkels ändert, wenn das dynamische Muster in einer ersten Betrachtungsrichtung betrachtet wird, erscheint die helle Linie an einer zentralen Position des dynamischen Musters, und wenn das Fälschungsschutzelement in verschiedene Richtungen geneigt wird, bewegt sich die helle Linie von der zentralen Position weg und ein Merkmalsbereich ist ein Bereichsspektrum, innerhalb dessen sich die helle Linie bewegt;
wobei der Merkmalsbereich eine Vielzahl von Strukturen mit gekrümmter Oberfläche umfasst, jede Struktur mit gekrümmter Oberfläche eine Vielzahl von Lichtkoordinatenzonen enthält, die parallel zu einer Oberfläche des Merkmalsbereichs verlaufen, jede der Lichtkoordinatenzonen eine erste Richtung (1) und eine zweite Richtung (2) enthält, jeweilige Lichtkoordinatenzonen in einer Eins-zu-Eins-Entsprechung zu Liniensegmenten mit unterschiedlichen Krümmungen auf der hellen Linie entsprechen; die gekrümmte Oberflächenstruktur entlang der ersten Richtung (1) gekrümmt gebildet ist, ein Krümmungsgrad der gekrümmten Oberflächenstruktur entlang der zweiten Richtung (2) geringer ist als ein Krümmungsgrad der gekrümmten Oberflächenstruktur entlang der ersten Richtung (1).

2. Fälschungsschutzelement nach Anspruch 1, **dadurch gekennzeichnet, dass** die erste Richtung (1) und die zweite Richtung (2) jeweils in einem vorgegebenen Winkel zur Tangentialrichtung der hellen Linie ausgelegt sind.

3. Fälschungsschutzelement nach Anspruch 2, **dadurch gekennzeichnet, dass** die erste Richtung (1) parallel zur Tangentialrichtung der hellen Linie verläuft und die zweite Richtung (2) senkrecht zur Tangentialrichtung der hellen Linie verläuft;
oder dass die erste Richtung (1) senkrecht zur Tangentialrichtung der hellen Linie verläuft und die zweite Richtung (2) parallel zur Tangentialrichtung der hellen Linie verläuft.

4. Fälschungsschutzelement nach Anspruch 1, **dadurch gekennzeichnet, dass** die gekrümmte Oberflächenstruktur eine vorbestimmte Neigungsrichtung entlang der zweiten Richtung (2) aufweist und ein Neigungsgrad der gekrümmten Oberflächenstruktur entlang der zweiten Richtung (2) mit einer relativen Position zwischen der gekrümmten Oberflächenstruktur und der hellen Linie in der zentralen Position korreliert ist; oder der Neigungsgrad der gekrümmten Oberflächenstruktur entlang der zweiten Richtung (2) positiv mit einem Abstand zwischen der gekrümmten Oberflächenstruktur und der hellen Linie in der zentralen Position korreliert; oder der Neigungsgrad der gekrümmten Oberflächenstruktur entlang der zweiten Richtung (2) proportional zu einem Abstand zwischen der gekrümmten Oberflächenstruktur und der hellen Linie in der zentralen Position ist.

5. Fälschungsschutzelement nach Anspruch 1 bis 4, **dadurch gekennzeichnet, dass** die Krümmungsgrade der gekrümmten Oberflächenstruktur sowohl entlang der ersten Richtung (1) als auch entlang der zweiten Richtung (2) anhand einer Neigungsdifferenz gemessen werden, wobei sich die Neigungsdifferenz auf einen Maximalwert der Differenz zwischen den Neigungen von Segmenten einer Querschnittslinie bezieht, die Querschnittslinie in einer Ebene liegt, die sowohl zur ersten Richtung (1) als auch zu einer Höhenrichtung (7) der gekrümmten Oberflächenstruktur parallel ist, oder die Querschnittslinie in einer Ebene liegt, die sowohl zur zweiten Richtung (2) als auch zur Höhenrichtung (7) der gekrümmten Oberflächenstruktur parallel ist,
wobei eine Neigungsdifferenz entlang der ersten Richtung (1) innerhalb mindestens eines Abschnitts der gekrümmten Oberflächenstruktur größer als 0,05 ist;
oder eine Neigungsdifferenz entlang der ersten Richtung (1) innerhalb mindestens eines Abschnitts der gekrümmten Oberflächenstruktur größer als 0,1 ist;
oder eine Neigungsdifferenz entlang der zweiten Richtung (2) innerhalb mindestens eines Abschnitts der gekrümmten Oberflächenstruktur kleiner als 0,05 ist.

6. Fälschungsschutzelement nach Anspruch 5, **dadurch gekennzeichnet, dass** mindestens ein Teil der gekrümmten Oberflächenstruktur entlang der zweiten Richtung (2) im Wesentlichen gerade verläuft.

7. Fälschungsschutzelement nach Anspruch 5, **dadurch gekennzeichnet, dass** für mindestens einen Teil der Vielzahl der Strukturen mit gekrümmter Oberfläche eine Neigungsdifferenz entlang der ersten Richtung (1) größer ist als das Zweifache einer Neigungsdifferenz entlang der zweiten Richtung (2);
oder für mindestens einen Teil der Vielzahl der Strukturen mit gekrümmter Oberfläche eine Neigungsdifferenz entlang der ersten Richtung (1) größer ist als das Zweifache einer Neigungsdifferenz entlang der zweiten Richtung (5);
oder bei mindestens einem Teil der Vielzahl der Strukturen mit gekrümmter Oberfläche eine Neigungsdifferenz entlang der ersten Richtung (1) zwischen dem 1,4- und 2,8-fachen einer maximalen durchschnittlichen Neigung entlang der zweiten Richtung (2) liegt;
oder für mindestens einen Teil der Vielzahl von Strukturen mit gekrümmter Oberfläche eine Neigungsdifferenz entlang der ersten Richtung (1) nicht mit der Änderung eines Abstands zwischen der Struktur mit gekrümmter Oberfläche und der hellen Linie in der zentralen Position variiert;
oder für mindestens einen Teil der Vielzahl von Strukturen mit gekrümmter Oberfläche die Neigungsdifferenz entlang der ersten Richtung (1) mit zunehmendem Abstand zwischen der Struktur mit gekrümmter Oberfläche und der hellen Linie in der zentralen Position abnimmt.

8. Fälschungsschutzelement nach Anspruch 1 bis 4, **dadurch gekennzeichnet, dass** ein Querschnitt der gekrümmten Oberflächenstruktur entlang der ersten Richtung (1) konvex und/oder konkav ist;
oder dass ein Abstand zwischen dem höchsten Punkt und dem tiefsten Punkt des Querschnitts der gekrümmten Oberflächenstruktur entlang der ersten Richtung (1) größer als 3 µm ist;
oder benachbarte der zahlreichen gekrümmten Oberflächenstrukturen eine durchgehende Wellenform bilden.

9. Fälschungsschutzelement nach Anspruch 1 bis 4, **dadurch gekennzeichnet, dass** die Begrenzungslinien zwischen mindestens einem Teil benachbarter der zahlreichen gekrümmten Oberflächenstrukturen (16) gekrümmt gebildet sind, und mindestens ein Teil der Begrenzungslinien (16) zwischen benachbarten der zahlreichen Strukturen mit gekrümmter Oberfläche so ausgelegt sind, dass sie einer Konturlinie der zahlreichen Strukturen mit gekrümmter Oberfläche folgen.

10. Fälschungsschutzelement nach Anspruch 1 bis 4, **dadurch gekennzeichnet, dass** die helle Linie eine gerade Linie und/oder eine gekrümmte Linie umfasst;
oder eine Ausdehnungslänge der gekrümmten Oberflächenstruktur entlang der zweiten Richtung (2) zwischen 3 µm und 50 µm liegt.

11. Fälschungsschutzelement nach einem der Ansprüche 1 bis 4, **dadurch gekennzeichnet, dass** die gekrümmte Oberflächenstruktur mindestens teilweise mit einer Metallschicht bedeckt ist;
und/oder die gekrümmte Oberflächenstruktur mindestens teilweise mit einer dielektrischen Schicht bedeckt ist;
und/oder die Struktur mit gekrümmter Oberfläche mindestens teilweise mit einer sekundären Mikrostruktur versehen ist;
und/oder die Differenz der Brechungsindizes der Materialien auf beiden Seiten der Struktur mit gekrümmter Oberfläche größer als 0,1 ist.

12. Fälschungsschutzelement nach einem der Ansprüche 1 bis 4, **dadurch gekennzeichnet, dass** zumindest ein Teil des Merkmalsbereichs zumindest teilweise eine dissipative Struktur umfasst, wobei eine Neigung der dissipativen Struktur größer ist als eine maximale Neigung der Vielzahl der Strukturen mit gekrümmter Oberfläche innerhalb des Fälschungsschutzelements.

13. Fälschungsschutzelement nach Anspruch 1 bis 4, **dadurch gekennzeichnet, dass** das dynamische Muster mindestens zwei helle Linien umfasst, die sich gegenseitig schneiden, und die Merkmalsbereiche, die jeweils den mindestens zwei hellen Linien entsprechen, zumindest einen Überlappungsbereich aufweisen, und der Überlappungsbereich die Strukturen mit gekrümmter Oberfläche umfasst, die jeweils den mindestens zwei hellen Linien entsprechen.

14. Artikel mit einem Fälschungsschutzelement, **dadurch gekennzeichnet, dass** er das Fälschungsschutzelement nach einem der Ansprüche 1 bis 13 umfasst.

15. Artikel mit einem Fälschungsschutzelement nach Anspruch 14, **dadurch gekennzeichnet, dass** das Fälschungsschutzelement einen ersten Teil und einen zweiten Teil umfasst,
wobei der erste Teil innerhalb des Artikels mit dem Fälschungsschutzelement angeordnet ist und der zweite Teil außerhalb des Artikels mit dem Fälschungsschutzelement angeordnet ist;
oder das Fälschungsschutzelement an einer Oberfläche des Artikels mit dem Fälschungsschutzelement angebracht ist.

## Revendications

1. Élément anti-contrefaçon (3, 4, 5, 6), comprenant :
un motif dynamique, ledit motif dynamique comprenant au moins une ligne lumineuse et présentant une apparence variant avec le changement d'angle d'observation ; lorsque le motif dynamique est observé dans une première direction d'observation, la ligne lumineuse est présentée en une position centrale du motif dynamique, et lorsque l'élément anti-contrefaçon est incliné dans différentes directions, la ligne lumineuse s'éloigne de la position centrale, et une zone de caractéristiques est une superficie dans laquelle la ligne lumineuse se déplace ;
ladite zone de caractéristiques comprenant une pluralité de structures à surface incurvée, chaque structure à surface incurvée présentant une pluralité de zones de coordonnées de lumière parallèles à une surface de la zone de caractéristiques, chacune des zones de coordonnées de lumière comprenant une première direction (1) et une deuxième direction (2), les zones de coordonnées de lumière respectives correspondant à des segments de ligne avec des courbures différentes sur la ligne lumineuse en correspondance biunivoque ; la structure à surface incurvée étant conformée de manière incurvée le long de la première direction (1), le degré de courbure de la structure à surface incurvée le long de la deuxième direction (2) étant inférieur au degré de courbure de la structure à surface incurvée le long de la première direction (1).

2. Élément anti-contrefaçon selon la revendication 1, **caractérisé en ce que** la première direction (1) et la deuxième direction (2) sont respectivement disposées selon un angle prédéfini par rapport à la direction tangente de la ligne lumineuse.

3. Élément anti-contrefaçon selon la revendication 2, **caractérisé en ce que** la première direction (1) est parallèle à la direction tangente de la ligne lumineuse, et la deuxième direction (2) est perpendiculaire à la direction tangente de la ligne lumineuse ; ou
la première direction (1) est perpendiculaire à la direction tangente de la ligne lumineuse, et la deuxième direction (2) est parallèle à la direction tangente de la ligne lumineuse.

4. Élément anti-contrefaçon selon la revendication 1, **caractérisé en ce que** la structure à surface incurvée présente une direction d'inclinaison prédéterminée le long de la deuxième direction (2), et le degré d'inclinaison de la structure à surface incurvée le long de la deuxième direction (2) est corrélé avec la position relative entre la structure à surface incurvée et la ligne lumineuse en position centrale ; ou le degré d'inclinaison de la structure à surface incurvée le long de la deuxième direction (2) est corrélé positivement avec la distance entre la structure à surface incurvée et la ligne lumineuse en position centrale ; ou le degré d'inclinaison de la structure à surface incurvée le long de la deuxième direction (2) est proportionnel à la distance entre la structure à surface incurvée et la ligne lumineuse en position centrale.

5. Élément anti-contrefaçon selon l'une quelconque des revendications 1 à 4, **caractérisé en ce que** les degrés de courbure de la structure à surface incurvée le long de la première direction (1) et de la deuxième direction (2) sont mesurés par une différence de pente, ladite différence de pente désignant une valeur maximale de la différence entre les pentes de segments d'une ligne de section transversale, la ligne de section transversale étant prise dans un plan parallèle à la fois à la première direction (1) et à une direction de hauteur (7) de la structure à surface incurvée, ou la ligne de section transversale étant prise dans un plan parallèle à la fois à la deuxième direction (2) et à la direction de hauteur (7) de la structure à surface incurvée,
ladite différence de pente le long de la première direction (1) au sein d'au moins une portion de la structure à surface incurvée étant supérieure à 0,05, ou
ladite différence de pente le long de la première direction (1) au sein d'au moins une portion de la structure à surface incurvée étant supérieure à 0,1, ou
ladite différence de pente le long de la deuxième direction (2) au sein d'au moins une portion de la structure à surface incurvée étant inférieure à 0,05.

6. Élément anti-contrefaçon selon la revendication 5, **caractérisé en ce qu'**au moins une portion de la structure à surface incurvée est sensiblement droite le long de la deuxième direction (2).

7. Élément anti-contrefaçon selon la revendication 5, **caractérisé en ce que**, pour au moins une partie de la pluralité de structures à surface incurvée, la différence de pente le long de la première direction (1) est supérieure à 2 fois la différence de pente le long de la deuxième direction (2) ; ou
pour au moins une partie de la pluralité de structures à surface incurvée, la différence de pente le long de la première direction (1) est supérieure à 5 fois la différence de pente le long de la deuxième direction (2) ; ou
pour au moins une partie de la pluralité des structures à surface incurvée, la différence de pente le long de la première direction (1) se situe entre 1,4 et 2,8 fois la pente moyenne maximale le long de la deuxième direction (2) ; ou
pour au moins une partie de la pluralité de structures à surface incurvée, la différence de pente le long de la première direction (1) ne varie pas avec le changement de distance entre la structure à surface incurvée et la ligne lumineuse en position centrale ; ou
pour au moins une partie de la pluralité de structures à surface incurvée, une différence de pente le long de la première direction (1) diminue avec l'augmentation de la distance entre la structure à surface incurvée et la ligne lumineuse en position centrale.

8. Élément anti-contrefaçon selon l'une quelconque des revendications 1 à 4, **caractérisé en ce que** la section transversale de la structure à surface incurvée le long de la première direction (1) est convexe et/ou concave ; ou
la distance entre le point le plus haut et le point le plus bas de la section transversale de la structure à surface incurvée le long de la première direction (1) est supérieure à 3 µm ; ou
celles des structures à surface incurvée qui sont adjacentes produisent une forme ondulée continue.

9. Élément anti-contrefaçon selon l'une quelconque des revendications 1 à 4, **caractérisé en ce que** les lignes de délimitation entre au moins une partie des structures à surface incurvée (16) adjacentes sont conformées de manière incurvée, et au moins une partie desdites lignes de délimitation (16) entre les structures à surface incurvée adjacentes sont disposées de manière à suivre une ligne de contour de la pluralité de structures à surface incurvée.

10. Élément anti-contrefaçon selon l'une quelconque des revendications 1 à 4, **caractérisé en ce que** la ligne lumineuse comprend une ligne droite et/ou une ligne incurvée ; ou
une longueur d'étendue de la structure à surface incurvée le long de la deuxième direction (2) est entre 3 µm et 50 µm.

11. Élément anti-contrefaçon selon l'une quelconque des revendications 1 à 4, **caractérisé en ce que** la structure à surface incurvée est au moins partiellement recouverte d'une couche métallique ; et/ou
la structure à surface incurvée est au moins partiellement recouverte d'une couche diélectrique ; et/ou
la structure à surface incurvée est au moins partiellement pourvue d'une microstructure secondaire sur celle-ci ; et/ou
une différence d'indices de réfraction des matériaux présents sur deux côtés de la structure à surface incurvée est supérieure à 0,1.

12. Élément anti-contrefaçon selon l'une quelconque des revendications 1 à 4, **caractérisé en ce qu'**au moins une partie de la zone de caractéristiques comprend au moins partiellement une structure dissipative, la pente de la structure dissipative étant supérieure à la pente maximale de la pluralité de structures à surface incurvée au sein de l'élément anti-contrefaçon.

13. Élément anti-contrefaçon selon l'une quelconque des revendications 1 à 4, **caractérisé en ce que** le motif dynamique comprend au moins deux lignes lumineuses qui se croisent, et les zones de caractéristiques correspondant respectivement auxdites au moins deux lignes lumineuses comportant au moins une zone de chevauchement, et ladite zone de chevauchement comprenant les structures à surface incurvée qui correspondent respectivement auxdites au moins deux lignes lumineuses.

14. Article comportant un élément anti-contrefaçon, **caractérisé en ce qu'**il comprend :
l'élément anti-contrefaçon selon l'une quelconque des revendications 1 à 13.

15. Article comportant un élément anti-contrefaçon selon la revendication 14, **caractérisé en ce que** l'élément anti-contrefaçon comprend une première partie et une deuxième partie,
ladite première partie étant disposée à l'intérieur de l'article comportant l'élément anti-contrefaçon, et ladite deuxième partie étant disposée à l'extérieur de l'article comportant l'élément anti-contrefaçon ; ou
l'élément anti-contrefaçon étant fixé à une surface de l'article comportant l'élément anti-contrefaçon.
